# EUROPEAN PATENT APPLICATION

(11) **EP 4 283 710 A1**
(43) Date of publication of application: **29.11.2023**
(21) Application number: 22742503.0
(22) Date of filing: 14.01.2022
(51) Int. Cl.: H01M 4/134, H01M 4/36, H01M 4/38, H01M 4/62

(54) **NEGATIVE ELECTRODE ACTIVE MATERIAL COMPOSITE PARTICLE, METHOD FOR MANUFACTURING NEGATIVE ELECTRODE ACTIVE MATERIAL COMPOSITE PARTICLE, AND NONAQUEOUS ELECTROLYTE SECONDARY BATTERY**

(30) Priority: 21.01.2021 JP 2021007940
(71) Applicant: Panasonic Energy Co., Ltd., Moriguchi-shi, Osaka, 570-8511 (JP)
(72) Inventor: KOIZUMI, Isao, Kadoma-shi, Osaka 571-0057 (JP); IWAMI, Yasunobu, Kadoma-shi, Osaka 571-0057 (JP); MORIYA, Shigeki, Kadoma-shi, Osaka 571-0057 (JP)
(74) Representative: Novagraaf International SA
(86) International application number: PCT/JP2022/001069
(87) International publication number: WO 2022/158381

(57) **Abstract**

A negative electrode active material composite particle according to one embodiment is a composite particle for a negative electrode active material, the composite particle including: a lithium silicate phase; silicon particles dispersed in the lithium silicate phase; and a resin-calcined material. The resin-calcined material containing at least one element selected from F and N. The composite particle has a porosity of 10% or less, for example, and the content of the resin-calcined material is 1-20% by mass with respect to the mass of the composite particle.

## Description

### TECHNICAL FIELD

The present disclosure generally relates to a composite particle for a negative electrode active material, a method for manufacturing a composite particle for a negative electrode active material, and a non-aqueous electrolyte secondary battery in which the composite particle are applied for a negative electrode active material.

### BACKGROUND ART

It is known that a silicon material containing silicon can occlude more lithium ions per unit volume compared with carbon materials such as graphite. Thus, using the silicon material as a negative electrode active material allows increase of a capacity of a battery. Although functioning as a negative electrode active material having a high charge-discharge capacity, the silicon material has a problem of large expansion and contraction with charge and discharge to easily cause cracking of particles. The cracking of the negative electrode active material particles increases particles isolated from a conductive path in a negative electrode, and these particles fail to contribute to the charge and discharge, leading to deterioration of the battery capacity. In addition, the cracking of the silicone material particles causes silicon in the particles to be directly contacted with an electrolyte liquid to promote a decomposition reaction of the electrolyte liquid, leading to deterioration of the battery capacity.

In view of such circumstances, various investigations have been made on the silicon material applied for the negative electrode active material. For example, Patent Literature 1 and 2 propose a method that electron conductivity is increased by forming a carbon coating on particle surfaces of the silicon material to easily provide the conductive path even if the particle cracking occurs, and inhibit the deterioration of the capacity. The method in Patent Literature 1 is a method of mixing silicon particles, graphite, and a carbon precursor, and then carbonization-treating the carbon precursor. The method in Patent Literature 2 is a method of forming a carbon coating on particle surfaces of a silicon compound by chemical vapor deposition.

Patent Literature 3 discloses, for inhibiting the cracking of active material particles to improve cycle characteristics of a battery, a method for relaxing expansion and contraction during charge and discharge by forming a composite of carbon with a silicon alloy powder. Furthermore, Patent Literature 4 discloses a method for improving cycle characteristics by using a lithium silicate phase as a matrix phase for forming a composite with silicon particles to inhibit a side reaction between the active material and the electrolyte liquid during charge and discharge.

### CITATION LIST

### PATENT LITERATURE

PATENT LITERATURE 1: Japanese Unexamined Patent Application Publication No. 2000-272911
PATENT LITERATURE 2: Japanese Unexamined Patent Application Publication No. 2000-215887
PATENT LITERATURE 3: Japanese Patent No. 5094013
PATENT LITERATURE 4: International Publication No. 2018/101072

### SUMMARY

### TECHNICAL PROBLEM

However, the art disclosed in Patent Literature 1 and 2 has no effect of preventing the cracking of the active material particles, and the effect of inhibiting the decomposition reaction of the electrolyte liquid is restrictive. The art disclosed in Patent Literature 3 may also not sufficiently yield the effect of inhibiting the cracking of the active material particles and the effect of inhibiting the decomposition reaction of the electrolyte liquid. The silicon material disclosed in Patent Literature 4 has many voids in the particles, and therefore reaction between the silicon in the particles and the electrolyte liquid and cracking of the active material particles may occur; and accordingly, there is still room for improvement of the cycle characteristics.

It is an advantage of the present disclosure to provide a composite particle for a negative electrode active material that contributes to improvement of the cycle characteristics of the battery.

### SOLUTION TO PROBLEM

A composite particle for a negative electrode active material of an aspect of the present disclosure is a composite particle for a negative electrode active material including: a lithium silicate phase; silicon particles dispersed in the lithium silicate phase; and a resin-calcined material, wherein the resin-calcined material contains at least one element selected from the group consisting of F and N.

A non-aqueous electrolyte secondary battery of an aspect of the present disclosure comprises: a negative electrode including the above composite particles for a negative electrode active material; a positive electrode; and a non-aqueous electrolyte.

A method for manufacturing a composite particle for a negative electrode active material of an aspect of the present disclosure includes: a step of mixing precursor particles each including a lithium silicate phase and silicon particles dispersed in the lithium silicate phase with a resin containing at least one element selected from the group consisting of F and N to produce a mixture; and a step of calcining the mixture.

### ADVANTAGEOUS EFFECT OF INVENTION

The cycle characteristics of the battery may be improved by applying the composite particle of an aspect of the present disclosure for the negative electrode active material.

### BRIEF DESCRIPTION OF DRAWINGS

FIG. 1 is a sectional view of a non-aqueous electrolyte secondary battery of an example of an embodiment.
FIG. 2 is a sectional view of a composite particle of an example of an embodiment.

### DESCRIPTION OF EMBODIMENTS

To improve the cycle characteristics by inhibiting the reaction between the silicon particles and the electrolyte liquid, a composite particle including a lithium silicate phase coated with silicon particles is useful. However, a battery using the composite particle including the lithium silicate phase deteriorates the cycle characteristics due to many voids present inside the particles. The present inventors have made intensive investigation to solve the above problem, and consequently found that the cycle characteristics are improved by introducing a resin-calcined material containing at least one element selected from the group consisting of F and N into a composite particle including the lithium silicate phase. It is considered that the resin-calcined material fills the internal voids of the lithium silicate phase to reinforce the silicate phase and inhibit particle cracking with charge and discharge. Using such a composite particle as a negative electrode active material may yield a non-aqueous electrolyte secondary battery having excellent cycle characteristics.

The composite particle according to the present disclosure may be manufactured by a simple method of mixing precursor particles each including a lithium silicate phase and silicon particles with a resin containing at least one element selected from the group consisting of F and N, and then calcining the mixture. The mixture may be calcined under the atmospheric pressure, and a special high-temperature and high-pressure condition is not required. An example of preferable resins is a polyimide, polytetrafluoroethylene (PTFE), or the like. As demonstrated in Examples described later, the effect of improving the cycle characteristics is not observed with a composite particle using a resin not containing F nor N, such as an acrylic resin and polyvinyl alcohol. That is, the calcined material of the resin containing F or N specifically modifies the composite particle to contribute to the improvement of the cycle characteristics.

Hereinafter, an example of embodiments of the composite particle for a negative electrode active material according to the present disclosure and a non-aqueous electrolyte secondary battery in which the composite particle is applied for a negative electrode active material will be described in detail with reference to the Drawings. Note that, the present disclosure includes selectively combining a plurality of embodiments and modified examples described below.

Hereinafter, a cylindrical battery in which a wound electrode assembly 14 is housed in a bottomed cylindrical exterior housing can 16 will be exemplified, but the exterior of the battery is not limited to a cylindrical exterior housing can, and may be, for example, a rectangular exterior housing can (rectangular battery), a coin-shaped exterior housing can (coin-shaped battery), or an exterior composed of laminated sheets including a metal layer and a resin layer (laminated battery). The electrode assembly may be a stacked electrode assembly in which a plurality of positive electrodes and a plurality of negative electrodes are alternately stacked with a separator interposed therebetween.

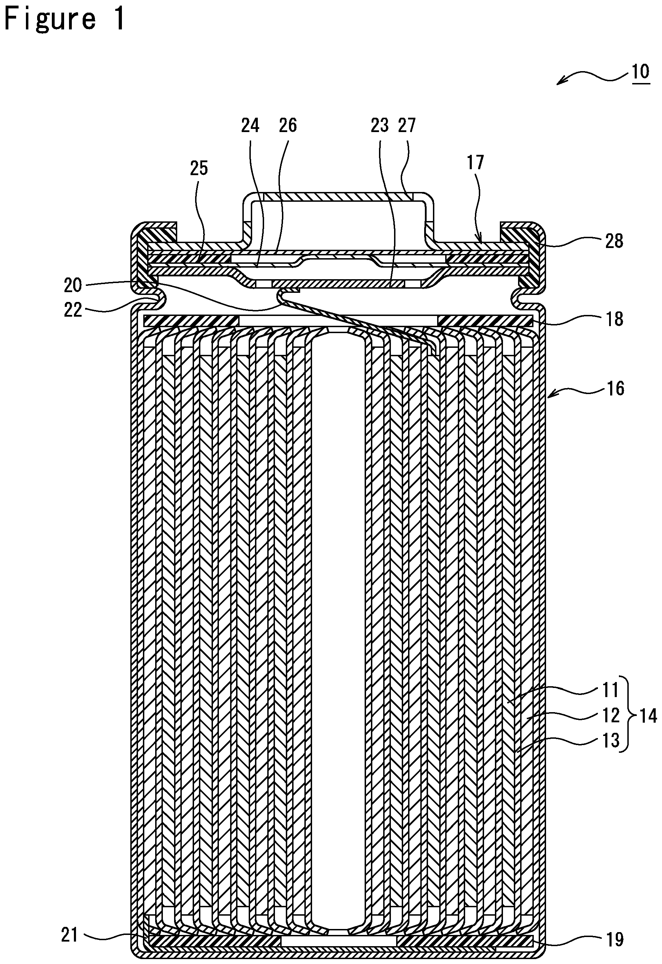

FIG. 1 is a view schematically illustrating a cross section of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen of these solvents is at least partially replaced with a halogen element such as fluorine. An example of the non-aqueous solvent is ethylene carbonate (EC), ethyl methyl carbonate (EMC), dimethyl carbonate (DMC), a mixed solvent thereof, or the like. For the electrolyte salt, a lithium salt such as LiPF₆ is used, for example. The non-aqueous electrolyte is not limited to a liquid electrolyte but may be a solid electrolyte.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and disposed to sandwich the positive electrode 11. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

The exterior housing can 16 is a bottomed cylindrical metallic container having an opening on one side in an axial direction, as noted above. A gasket 28 is provided between the exterior housing can 16 and the sealing assembly 17, thereby sealability inside the battery and insulation between the exterior housing can 16 and the sealing assembly 17 are ensured. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure increases due to battery abnormality, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the non-aqueous electrolyte secondary battery 10, specifically the negative electrode active material constituting the negative electrode 12, will be described in detail.

### [Positive Electrode]

The positive electrode 11 has a positive electrode core and a positive electrode mixture layer provided on a surface of the positive electrode core. For the positive electrode core, a foil of a metal stable within a potential range of the positive electrode 11, such as aluminum and an aluminum alloy, a film in which such a metal is disposed on a surface layer thereof, and the like may be used. The positive electrode mixture layer includes a positive electrode active material, a conductive agent, and a binder, and is preferably provided on both surfaces of the positive electrode core except for a core exposed portion to which a positive electrode lead is to be connected. A thickness of the positive electrode mixture layer is, for example, greater than or equal to 50 µm and less than or equal to 150 µm on one side of the positive electrode core. The positive electrode 11 may be produced by applying a positive electrode mixture slurry including the positive electrode active material, the conductive agent, the binder, and the like on the surface of the positive electrode core, and drying and subsequently compressing the coating to form the positive electrode mixture layers on both the surfaces of the positive electrode core.

The positive electrode active material is constituted with a lithium-transition metal composite oxide as a main component. Examples of an element contained in the lithium-transition metal composite oxide and excluding Li include Ni, Co, Mn, Al, B, Mg, Ti, V, Cr, Fe, Cu, Zn, Ga, Sr, Zr, Nb, In, Sn, Ta, W, Si, and P. An example of the preferable lithium-transition metal composite oxide is a composite oxide containing at least one of Ni, Co, and Mn. Specific examples thereof include a lithium-transition metal composite oxide containing Ni, Co, and Mn, and a lithium-transition metal composite oxide containing Ni, Co, and Al.

Examples of the conductive agent included in the positive electrode mixture layer include a carbon material such as carbon black, acetylene black, Ketjenblack, and graphite. Examples of the binder included in the positive electrode mixture layer include a fluororesin such as polytetrafluoroethylene (PTFE) and polyvinylidene fluoride (PVdF), polyacrylonitrile (PAN), a polyimide resin, an acrylic resin, and a polyolefin resin. With these resins, a cellulose derivative such as carboxymethylcellulose (CMC) or a salt thereof, polyethylene oxide (PEO), and the like may be used in combination.

### [Negative Electrode]

The negative electrode 12 has a negative electrode core and a negative electrode mixture layer provided on a surface of the negative electrode core. For the negative electrode core, a foil of a metal stable within a potential range of the negative electrode, such as copper and a copper alloy, a film in which such a metal is disposed on a surface layer thereof, and the like may be used. The negative electrode mixture layer is preferably provided on both surfaces of the negative electrode core except for a core exposed portion to which a negative electrode lead is to be connected. A thickness of the negative electrode mixture layer is, for example, greater than or equal to 50 µm and less than or equal to 150 µm on one side of the negative electrode core. The negative electrode 12 may be produced by applying a negative electrode mixture slurry including a negative electrode active material, a binder, and the like on surfaces of the negative electrode core, drying and subsequently compressing the coating to form the negative electrode mixture layers on both the surface of the negative electrode core.

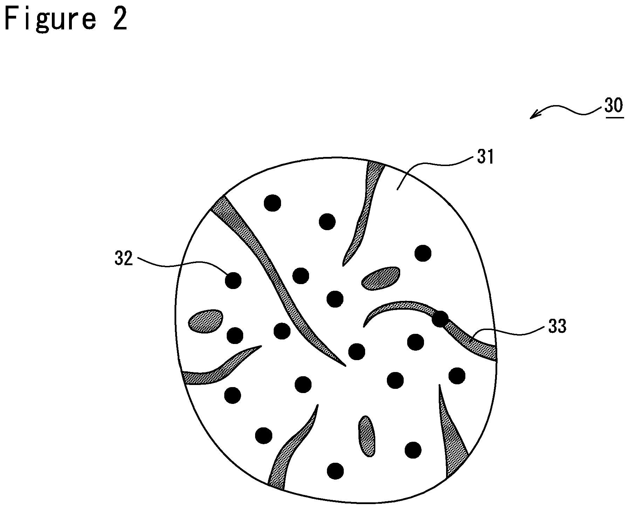

FIG. 2 is a view schematically illustrating a particle cross section of the composite particle 30. The negative electrode mixture layer includes the composite particles 30. The composite particle 30 is a composite containing silicon (Si). Si in the particle forms an alloy with Li to occlude Li during charge of the battery, and releases the occluded Li during discharge. Since the composite particle 30 can occlude more Li per unit volume compared with carbon materials such as graphite, the composite particle 30 functions as a negative electrode active material with a high capacity. The negative electrode mixture layer may include a carbon-based active material in addition to the composite particle 30. Using the composite particle 30, which is a Si-based active material, and the carbon-based material in combination facilitates achievement of the non-aqueous electrolyte secondary battery having a high capacity and excellent cycle characteristics.

For the carbon-based active material, graphite is preferably used. The graphite may be, for example, natural graphite such as spherical graphite and flake graphite, artificial graphite such as massive artificial graphite and graphitized mesophase carbon microbead, or a mixture thereof. An example of a median diameter (D50) of the graphite on a volumetric basis is greater than or equal to 10 µm and less than or equal to 30 µm, and preferably greater than or equal to 18 µm and less than or equal to 24 µm. The D50 means a particle diameter at which a cumulative frequency is 50% from a smaller particle diameter side in a particle size distribution on a volumetric basis. The particle size distribution may be measured by using a laser diffraction-type particle size distribution measuring device (for example, MT3000II, manufactured by MicrotracBEL Corp.) with water as a dispersion medium.

For the binder included in the negative electrode mixture layer, a fluororesin, PAN, a polyimide resin, an acrylic resin, a polyolefin resin, and the like may be used as in the case of the positive electrode 11, but styrene-butadiene rubber (SBR), polyacrylic acid (PAA) or a salt thereof, CMC or a salt thereof, polyvinyl alcohol (PVA), and the like are preferably used. Among them, PAA or a salt thereof is preferably used. PAA has good compatibility with the composite particle 30, and adding PAA contributes to improvement of the cycle characteristics. For the binder in the negative electrode mixture layer, SBR; and PAA or a salt thereof are preferably used in combination, and SBR; PAA or a salt thereof; and CMC or a salt thereof are more preferably used in combination. A content of the binder is, for example, greater than or equal to 0.1 mass% and less than or equal to 5 mass%, or greater than or equal to 0.5 mass% and less than or equal to 3 mass%, relative to the mass of the negative electrode mixture layer.

As illustrated in FIG. 2, the composite particle 30 is a particle including a silicate phase 31, Si particles 32 dispersed in the silicate phase 31, and a resin-calcined material 33. The resin-calcined material 33 contains at least one element selected from the group consisting of F and N. As will be described later in detail, the composite particle 30 is manufactured by mixing precursor particles each including the silicate phase 31 and the Si particles 32 with a predetermined resin, and calcining the mixture. The resin-calcined material 33, which is a calcined product of the resin mixed with the precursor particle, is present in the particles of the composite particle 30, similarly to the Si particles 32, and it can be said that the resin-calcined material 33 is dispersed in the silicate phase 31, which is a matrix phase constituting the composite particle 30.

It has been found that the particle cracking is specifically inhibited by introducing the resin-calcined material 33 into the composite particle 30. Thus, when the composite particle 30 is used as the negative electrode active material, the cycle characteristics of the battery is remarkably improved compared with a case where a silicon-based active material not including the resin-calcined material 33 is used. As demonstrated in Examples described later, the effect of improving the cycle characteristics may not be obtained by introducing a resin-calcined material containing no F nor N in the particle, and thereby it is considered that the resin-calcined material 33 containing F or N specifically modifies the particle.

A content of the composite particle 30 is, for example, greater than or equal to 0.1 mass%, more preferably greater than or equal to 0.5 mass% and less than or equal to 30 mass%, or greater than or equal to 1 mass% and less than or equal to 15 mass%, or greater than or equal to 2 mass% and less than or equal to 10 mass%, relative to the mass of the negative electrode mixture layer. When the content of the composite particle 30 is within the above range, the high capacity and the good cycle characteristics are easily achieved. A main component in the negative electrode mixture layer is the negative electrode active material, and a content of the negative electrode active material is preferably greater than or equal to 90 mass% and less than or equal to 99 mass%, or greater than or equal to 92 mass% and less than or equal to 98 mass%, relative to the mass of the negative electrode mixture layer. The negative electrode mixture layer includes, for example, greater than or equal to 65 mass% and less than or equal to 95 mass% of the carbon-based active material.

The composite particle 30 has a particle structure in which the fine Si particles 32 are dispersed in the silicate phase 31. The fine Si particles 32 are substantially uniformly dispersed in the matrix of lithium silicate, and a particle cross section of the composite particle 30 has a sea-island structure in which the silicate phase 31 is a sea and the Si particles 32 are islands. On the particle surface of the composite particle 30, a conductive layer composed of a highly conductive material is preferably formed. An example of preferable conductive layers is a carbon coating composed of a carbon material. A thickness of the carbon coating is preferably greater than or equal to 1 nm and less than or equal to 200 nm, and more preferably greater than or equal to 5 nm and less than or equal to 100 nm, with considering providing the conductivity and diffusibility of Li ions toward the particle inside.

The silicate phase 31 is composed of aggregation of particles finer than the Si particles 32. The cracking of the composite particle 30 with charge and discharge is mainly caused by cracking on the silicate phase 31 due to volumetric change of the Si particles 32. In the composite particle 30, it is considered that the effect of the resin-calcined material 33 inhibits the cracking on the silicate phase 31 to inhibit the particle cracking. A content rate of the Si particles 32 is preferably greater than or equal to 35 mass% and less than or equal to 75 mass% relative to the total mass of the composite particle 30 from the viewpoints of achievements of both the battery capacity and the cycle characteristics, and the like.

The lithium silicate phase 31 is preferably composed of a compound represented by the general formula Li_{2z}SiO_{(2+z)} (0 < z < 2). That is, the lithium silicate phase does not include Li₄SiO₄ (Z=2). Li₄SiO₄, which is an unstable compound, reacts with water and exhibits alkalinity, and therefore may modify Si, resulting in deterioration of the charge-discharge capacity. The lithium silicate phase 31 preferably contains Li₂SiO₃ (Z=1) or Li₂Si₂O₅ (Z=1/2) as a main component from the viewpoints of stability, production easiness, Li ion conductivity, and the like.

The carbon coating constituting the conductive layer is composed of carbon black, acetylene black, Ketjenblack, graphite, a mixture of two or more thereof, and the like, for example. Examples of a method for carbon-coating the particle surface of the composite particle 30 include: a CVD method using acetylene, methane, and the like; and a method in which coal pitch, petroleum pitch, a phenol resin, and the like are mixed with the composite particle 30 to be subjected to a heat treatment. A carbon powder such as carbon black may adhere onto the particle surface using a binder to form the carbon coating.

As noted above, the resin-calcined material 33 is a calcined product of a resin containing at least one element selected from the group consisting of F and N. The resin constituting the resin-calcined material 33 may be any resin containing F or N. An example of preferable resins is a fluororesin such as PTFE, PVdF, a perfluoroalkoxyalkane (PFA), a perfluoroethylene-propene copolymer (FEP), an ethylene-tetrafluoroethylene copolymer (ETFE), and polychlorotrifluoroethylene (PCTFE), and a N-containing resin such as a polyamide, an aramid, and a polyimide. The resin-calcined material 33 has the same main skeleton as that of the resin before the calcination. The resin is partially decomposed with the calcination to reduce its mass by approximately greater than or equal to 5% and less than or equal to 20% with differential thermal analysis, but the main skeleton of the resin does not change.

A content of the resin-calcined material 33 is preferably greater than or equal to 0.5 mass% and less than or equal to 25 mass%, more preferably greater than or equal to 1 mass% and less than or equal to 20 mass%, particularly preferably greater than or equal to 1 mass% and less than or equal to 15 mass%, or greater than or equal to 2 mass% and less than or equal to 10 mass%, relative to the mass of the composite particle 30. When the content of the resin-calcined material 33 is within the above range, the high capacity and the good cycle characteristics are easily achieved. Although the composite particle 30 has internal voids, the void is reduced compared with conventional particles. On the particle cross section of the composite particle 30, an area of the resin-calcined material 33 is larger than an area of the voids, for example. In this case, the cracking of the composite particle 30 may be more effectively inhibited.

The resin-calcined material 33 is distributed within a wide range of the silicate phase 31 without uneven distribution in a part of the silicate phase 31. On the particle cross section of the composite particle 30, the resin-calcined material 33 is present in a fibrous or particle shape. The resin-calcined material 33 coats at least a part of the Si particles 32. In this case, the resin-calcined material 33 can absorb the volumetric change of the Si particles 32 efficiently, and the particle cracking can be more effectively inhibited. A part of the resin-calcined material 33 is contacted with the particle surfaces of the Si particles 32, and may be interposed between the silicate phase 31 and the Si particles 32.

A porosity of the composite particle 30 is, for example, less than or equal to 10%, preferably less than or equal to 7%, more preferably less than or equal to 5%, and further preferably less than or equal to 3%. The porosity of the particle means a proportion of void in an area of the composite particle 30 on the particle cross section of the composite particle 30. The porosity is determined by observing the particle cross section using a scanning electron microscope (SEM).

D50 of the composite particle 30 is, for example, greater than or equal to 5 µm and less than or equal to 25 µm, and preferably smaller than D50 of the graphite. The D50 of the composite particle 30 is preferably greater than or equal to 5 µm and less than or equal to 20 µm, and more preferably greater than or equal to 5 µm and less than or equal to 15 µm. When the particle diameter of the composite particle 30 is within the above range, the high capacity and the good cycle characteristics are easily achieved.

The composite particle 30 is manufactured by: a step of mixing precursor particles each including the silicate phase 31 and the Si fine particles 32 dispersed in the silicate phase 31 with the resin containing at least one element selected from the group consisting of F and N to produce a mixture; and a step of calcining the mixture. The precursor particles are produced by mixing lithium silicate particles to be the silicate phase 31 and a raw material Si to be the Si particles 32, and performing a crushing treatment under an inert gas atmosphere. For the crushing treatment of the mixture, a ball mill may be used. For example, the crushing treatment is performed under a condition of 200 rpm for 50 hours. The lithium silicate particles are produced by mixing silicon dioxide and lithium carbonate, and then calcining the mixture in air.

Mixing the precursor particle and the resin enables the resin to enter the void of the precursor particle, and the resin is incorporated inside the precursor particle. For the mixing of the resin, a ball mill may be used. For example, the mixing treatment is performed under a condition of 200 rpm for 1 hour. For the resin, as noted above, a fluororesin such as PTFE and PVdF and a N-containing resin such as a polyimide are used. The mixture of the precursor particle and the resin is calcined under an inert gas atmosphere at a temperature of greater than or equal to 300°C and less than or equal to 1000°C. An example of a preferable calcining temperature is greater than or equal to 400°C and less than or equal to 800°C, or greater than or equal to 500°C and less than or equal to 700°C. The calcining time is, for example, greater than or equal to 2 hours and less than or equal to 6 hours, or greater than or equal to 3 hours and less than or equal to 5 hours. This calcination enables the resin incorporated inside the precursor particle to form the resin-calcined material 33.

Although the mixture may be calcined under a pressurized condition, the mixture is preferably calcined under the atmospheric pressure from the viewpoint of process cost reduction. That is, a special high-temperature and high-pressure condition is not required for manufacturing the composite particle 30. The composite particle 30 may be manufactured by a simple method of mixing the precursor particle including the silicate phase 31 and the Si particles 32 with the resin containing at least one element selected from the group consisting of F and N, and then calcining the mixture. After calcining the mixture, a crushing treatment may be performed as necessary. Such a method yields the composite particle 30 including the silicate phase 31, the Si particles 32, and the resin-calcined material 33.

On the surface of the composite particle 30, the carbon coating is preferably formed, as noted above. The carbon coating covering the surface of the composite particle 30 may be formed by, for example, mixing the composite particle 30 and a carbon raw material such as coal pitch, and then performing a heat treatment. An example of a preferable calcining temperature is greater than or equal to 500°C and less than or equal to 700°C, and set to a temperature less than or equal to the calcining temperature of the above mixture.

### [Separator]

For the separator 13, a porous sheet having an ion permeation property and an insulation property is used. Specific examples of the porous sheet include a fine porous thin film, a woven fabric, and a nonwoven fabric. As a material for the separator 13, a polyolefin such as polyethylene, polypropylene, and a copolymer of ethylene and an α-olefin, cellulose, and the like are preferable. The separator 13 may have any of a single layer structure and a stacked structure. On a surface of the separator 13, a heat-resistant layer including inorganic particles, a heat-resistant layer constituted with a highly heat-resistant resin such as an aramid resin, a polyimide, and a polyamide imide, and the like may be formed.

### EXAMPLES

Hereinafter, the present disclosure will be further described with Examples, but the present disclosure is not limited to these Examples.

### <Example 1>

### [Production of Composite Particle]

Silicon dioxide and lithium carbonate were mixed so that an element ratio of Si/Li was 1.05, and the mixture was calcined in air at 950°C for 10 hours to obtain a lithium silicate represented by the formula Li₂O·2.1SiO₂ (x=2.1). The obtained lithium silicate was crushed so as to have D50 of 10 µm. The lithium silicate having D50 of 10 µm and a raw material silicon (3N, D50: 10 µm) were mixed at a mass ratio of 50:50, the mixture was poured into a pot (made of SUS, capacity: 500 mL) of a planetary ball mill (P-5, manufactured by Fritsch GmbH), 24 balls (diameter 20 mm) made of SUS were added into the pot and the lid was closed, and under an inert gas atmosphere, the mixture was crushtreated under a condition of 200 rpm for 50 hours to produce a precursor particle of a composite particle.

Thereafter, a predetermined amount of polyimide (PI) was added into the pot including the precursor particle under an inert gas atmosphere, and the mixture was mixtreated at 200 rpm for 1 hour. The amount of the polyimide added was regulated so that a content of a resin-calcined material was 1 mass% relative to the composite particle. This mixing treatment enabled the resin to be interposed inside void of the precursor particle. The precursor particle subjected to the mixing treatment with the resin was taken out from the pot, and calcined in an inert gas atmosphere at 600°C for 4 hours to obtain a composite particle including the silicate phase, the silicon particles dispersed in the silicate phase, and the resin-calcined material. The composite particle was crushed, passed through a mesh with 40 µm, mixed with coal pitch (MCP 250, manufactured by JFE Chemical Corporation), and the mixture was calcined under an inert gas atmosphere at 600°C for 1 hour to form a conductive layer composed of a conductive carbon on a surface of the composite particle. An amount of the coating of the conductive carbon was 5 mass% relative to the total mass of the composite particle and the conductive carbon. Thereafter, a sieve was used to obtain a composite particle A1 (D50: 10 µm) having the conductive layer.

### [Production of Negative Electrode]

As a negative electrode active material, graphite having D50 of 22 µm was used together with the composite particle A1. The graphite, the composite particle A1, polyacrylic acid (PAA), carboxymethylcellulose (CMC), and a dispersion of styrene-butadiene rubber (SBR) were mixed at a solid content mass ratio of 92.2:4.8:1:1:1, and the mixture was kneaded in ion-exchanged water to prepare a negative electrode mixture slurry. This negative electrode mixture slurry was applied on both surfaces of a negative electrode core made of copper foil by a doctor blade method, the coating was dried and then compressed by using a roller to produce a negative electrode in which negative electrode mixture layers were formed on both the surfaces of the negative electrode core.

### [Production of Positive Electrode]

As a positive electrode active material, lithium nickel-cobalt-aluminate was used. The positive electrode active material, acetylene black, and polyvinylidene fluoride were mixed at a mass ratio of 95:2.5:2.5, N-methyl-2-pyrrolidone (NMP) was added, and then the mixture was stirred by using a mixer (T.K. HIVIS MIX, manufactured by PRIMIX Corporation) to prepare a positive electrode mixture slurry. This positive electrode mixture slurry was applied on both surfaces of a positive electrode core made of aluminum foil by a doctor blade method, the coating was dried and then compressed by using a roller to produce a positive electrode in which positive electrode mixture layers were formed on both the surfaces of the positive electrode core.

### [Preparation of Non-Aqueous Electrolyte Liquid]

Into a mixed solvent in which ethylene carbonate (EC) and diethyl carbonate (DEC) were mixed at a volume ratio of 3:7 (at 25°C), LiPF₆ was dissolved at a concentration of 1 mol/L to prepare a non-aqueous electrolyte liquid.

### [Production of Non-Aqueous Electrolyte Secondary Battery]

Leads were attached to each of the positive electrode and the negative electrode. The positive electrode and the negative electrode were spirally wound with a separator interposed therebetween so that the leads were positioned on the outermost peripheral part to produce a wound electrode assembly. This electrode assembly was inserted into an exterior made of an aluminum laminated film, and dried in vacuo at 105°C for 2 hours. Thereafter, the non-aqueous electrolyte liquid was injected into the exterior, and an opening of the exterior was sealed to obtain a battery.

### <Example 2>

A composite particle A2 and a battery were produced in the same manner as in Example 1 except that, in the production of the composite particle, the amount of the polyimide added to be mixed with the precursor particle was changed so that the content of the resin-calcined material was 5 mass%.

### <Example 3>

A composite particle A3 and a battery were produced in the same manner as in Example 1 except that, in the production of the composite particle, the resin to be mixed with the precursor particle was changed from the polyimide (PI) to polytetrafluoroethylene (PTFE).

### <Example 4>

A composite particle A4 and a battery were produced in the same manner as in Example 2 except that, in the production of the composite particle, the resin to be mixed with the precursor particle was changed from the polyimide (PI) to PTFE.

### <Example 5>

A composite particle A5 and a battery were produced in the same manner as in Example 2 except that, in the production of the composite particle, the resin to be mixed with the precursor particle was changed from the polyimide (PI) to polyvinylidene fluoride (PVdF).

### <Example 6>

A composite particle A6 and a battery were produced in the same manner as in Example 1 except that, in the production of the composite particle, the amount of the PTFE added to be mixed with the precursor particle was changed so that the content of the resin-calcined material was 8 mass%.

### <Example 7>

A composite particle A7 and a battery were produced in the same manner as in Example 1 except that, in the production of the composite particle, the amount of the PTFE added to be mixed with the precursor particle was changed so that the content of the resin-calcined material was 20 mass%.

### <Comparative Example 1>

A composite particle B 1 and a battery were produced in the same manner as in Example 2 except that, in the production of the composite particle, the polyimide (PI) was not mixed with the precursor particle.

### <Comparative Example 2>

A composite particle B2 and a battery were produced in the same manner as in Example 2 except that, in the production of the composite particle, the resin to be mixed with the precursor particle was changed from the polyimide (PI) to polyvinyl alcohol (PVA).

### <Comparative Example 3>

A composite particle B3 and a battery were produced in the same manner as in Example 2 except that, in the production of the composite particle, the resin to be mixed with the precursor particle was changed from the polyimide (PI) to polyacrylic acid (PAA).

Charge-discharge cycle characteristics of each of the batteries of Examples and Comparative Examples were evaluated by the following method. Table 1 shows the evaluation results together with the kind of the resin to be mixed with the precursor particle and the content of the resin-calcined material.

### [Evaluation of Cycle Characteristics]

A cycle test of each battery was performed under the following charge-discharge condition. A rate of a discharge capacity at the 200th cycle to a discharge capacity at the 1st cycle was determined as a capacity maintenance rate.

### <Charge>

The battery was charged at a constant current of 1 It (800 mA) until a battery voltage reached 4.2 V, and then charged at a constant voltage of 4.2 V until a current reached 1/20 It (40 mA).

### <Discharge>

The battery was discharged at a constant current of 1 It (800 mA) until the battery voltage reached 2.75 V. An interval period between the charge and the discharge was 10 minutes.

**[Table 1]**

| | Resin | Content of calcined material (wt%) | Capacity maintenance rate (%) |
|---|---|---|---|
| Example 1 | PI | 1 | 69 |
| Example 2 | PI | 5 | 73 |
| Example 3 | PTFE | 1 | 75 |
| Example 4 | PTFE | 5 | 78 |
| Example 5 | PVdF | 5 | 77 |
| Example 6 | PTFE | 8 | 78 |
| Example 7 | PTFE | 20 | 63 |
| Comparative Example 1 | - | 0 | 60 |
| Comparative Example 2 | PVA | 5 | 58 |
| Comparative Example 3 | PAA | 5 | 60 |

As shown in Table 1, any of the batteries of Examples have a higher capacity maintenance rate and excellent charge-discharge cycle characteristics compared with the batteries of Comparative Examples. It is understood from the results shown in Table 1 that the composite particle is specifically modified by introducing the resin-calcined material containing at least one element selected from the group consisting of F and N into the composite particle including the lithium silicate phase, and the cycle characteristics are remarkably improved.

Among Examples, when PTFE and PVdF, which contain F, were used as the resin to be mixed with the precursor particle (Examples 3 to 7) and when the content of the resin-calcined material in the composite particle was greater than or equal to 1 mass% and less than or equal to 8 mass% (Examples 1 to 6), the effect of improving the cycle characteristics was more remarkable. Among them, the batteries of Examples 4 to 6 had particularly excellent cycle characteristics.

When the precursor particle and the resin were not mixed, that was when the composite particle did not include the resin-calcined material, the capacity maintenance rate was deteriorated to 60% (Comparative Example 1). In addition, even the mixture of the resin not containing F nor N, such as PVA and PAA, and the precursor particle was used, the effect of improving the capacity maintenance rate was all not obtained. Mixing PVA resulted in a deteriorated capacity maintenance rate rather than a case where no resin was mixed (Comparative Examples 2 and 3).

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Composite particle, 31 Silicate phase, 32 Si particle, 33 Resin-calcined material

## Claims

1. A composite particle for a negative electrode active material, including:
a lithium silicate phase;
silicon particles dispersed in the lithium silicate phase; and
a resin-calcined material, wherein
the resin-calcined material contains at least one element selected from the group consisting ofF and N.

2. The composite particle for a negative electrode active material according to claim 1, wherein a content of the resin-calcined material is greater than or equal to 1 mass% and less than or equal to 20 mass% relative to a mass of the composite particle.

3. The composite particle for a negative electrode active material according to claim 1 or 2, wherein the resin-calcined material coats at least a part of the silicon particles.

4. The composite particle for a negative electrode active material according to any one of claims 1 to 3, wherein a porosity of the composite particle is less than or equal to 10%.

5. A non-aqueous electrolyte secondary battery, comprising:
a negative electrode including the composite particles for a negative electrode active material according to any one of claims 1 to 4;
a positive electrode; and
a non-aqueous electrolyte.

6. The non-aqueous electrolyte secondary battery according to claim 5, wherein a content of the composite particle is greater than or equal to 0.5 mass% and less than or equal to 30 mass% relative to a mass of a mixture layer of the negative electrode.

7. The non-aqueous electrolyte secondary battery according to claim 5 or 6, wherein the mixture layer includes polyacrylic acid.

8. A method for manufacturing a composite particle for a negative electrode active material, including:
a step of mixing precursor particles each including a lithium silicate phase and silicon particles dispersed in the lithium silicate phase with a resin containing at least one element selected from the group consisting of F and N to produce a mixture; and
a step of calcining the mixture.

9. The method for manufacturing a composite particle for a negative electrode active material according to claim 8, wherein the mixture is calcined under an inert gas atmosphere at a temperature of greater than or equal to 300°C and less than or equal to 1000°C.

10. The method for manufacturing a composite particle for a negative electrode active material according to claim 8 or 9, wherein the mixture is calcined under an atmospheric pressure.
